# EUROPEAN PATENT SPECIFICATION

(11) **EP 4 497 975 B1**
(45) Date of publication and mention of the grant of the patent: **09.09.2026**
(21) Application number: 24189645.5
(22) Date of filing: 19.07.2024
(51) Int. Cl.: F16H 37/04, F16H 3/093

(54) **IMPROVED TRANSMISSION ARCHITECTURE FOR AGRICULTURAL VEHICLES**
VERBESSERTE GETRIEBEARCHITEKTUR FÜR LANDWIRTSCHAFTLICHE FAHRZEUGE
ARCHITECTURE DE TRANSMISSION AMÉLIORÉE POUR VÉHICULES AGRICOLES

(30) Priority: 24.07.2023 IT 202300015483
(43) Date of publication of application: 29.01.2025
(73) Proprietor: CNH Industrial Italia S.p.A., 10156 Torino (IT)
(72) Inventor: FORTE, Michelantonio, 10156 Turin (IT); FRULLI, Alberto, 10156 Turin (IT)
(74) Representative: CNH Industrial IP Department

(56) References cited:
- EP-A1- 0 128 251
- US-A- 4 294 130
- US-A- 5 901 606

## Description

### TECHNICAL FIELD

The present invention relates to a transmission architecture, in particular a transmission architecture for an off-road vehicle such as an agricultural vehicle and to a related method for controlling the gear shifting of such transmission.

### BACKGROUND OF THE INVENTION

Transmissions for off-road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

For this reason, in the art, the dual-clutch transmission, DCT, architecture is considered the most valuable layout for powershift transmissions in order to satisfy all the previous demands:
- it provides a high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles. An example of such DCT architecture is disclosed in patent document IT102022000024729 A1.

However new requirements request higher speeds of the agricultural vehicles in a wide torque range. This lead to difficulty in gear shifting due to high inertia between the different branches of the transmission.

Moreover, the need of providing more and more transmission stages would lead to high encumbrance and high weight transmission.

Examples of known transmission architectures are disclosed in patent publications US4294130 A, EP0128251 A1 or US5901606 A. US4294130 A discloses an architecture for a dual clutch transmission for a work vehicle that comprises an input stage, a gear ratio stage and a range gear ratio stage operatively connected one to the other with respect to an input shaft and an output shaft.

Therefore, the need is felt to solve the aforementioned drawbacks in order to maintain a wide range of transmittable torque, at high speeds but with smoother gear shifting and by reducing inertia in different branchers of the transmission.

Furthermore, it is requested to reduce encumbrances of the transmission, its manufacturing time and therefore its costs.

Aim of the present invention is to satisfy the above-mentioned needs in a cost-effective and optimized way.

### SUMMARY OF THE INVENTION

According to the invention, the aforementioned aim is reached by an architecture for a dual clutch transmission according to claim 1 and a related control method according to claim 13. The dependent claims show further advantageous embodiments of the invention.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a transmission architecture according to a first embodiment of the present invention;
- Figure 1A is a schematic representation of the transmission architecture of figure 1 showing concerned power flows in an exemplarily operative condition;
- Figure 1B is a table indicating the activation of elements of the transmission architecture of figure 1;
- Figure 2 is a schematic representation of a transmission architecture according to a second embodiment of the present invention;
- Figure 2A is a schematic representation of the transmission architecture of figure 1 showing concerned power flows in an exemplarily operative condition; and
- Figure 2B is a table indicating the activation of elements of the transmission architecture of figure 2.

### DETAILED DESCRIPTION OF THE INVENTION

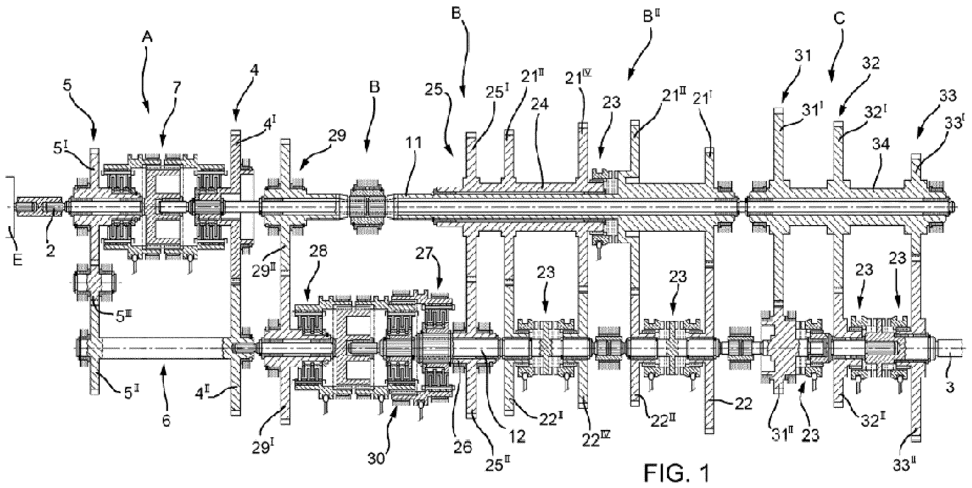

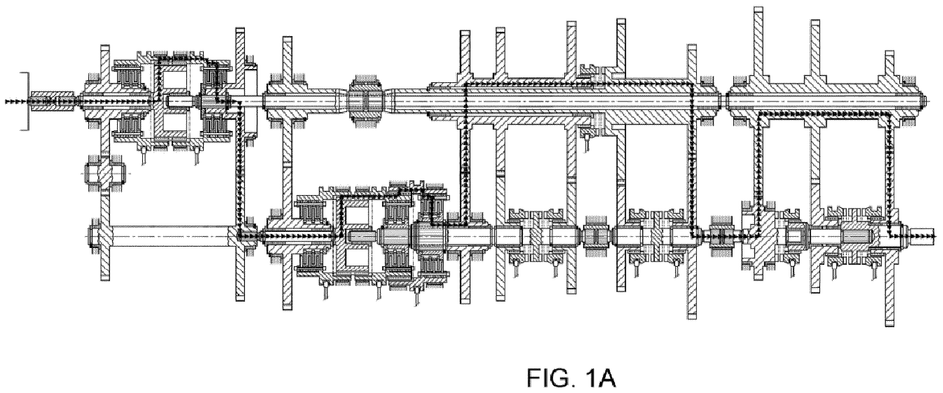

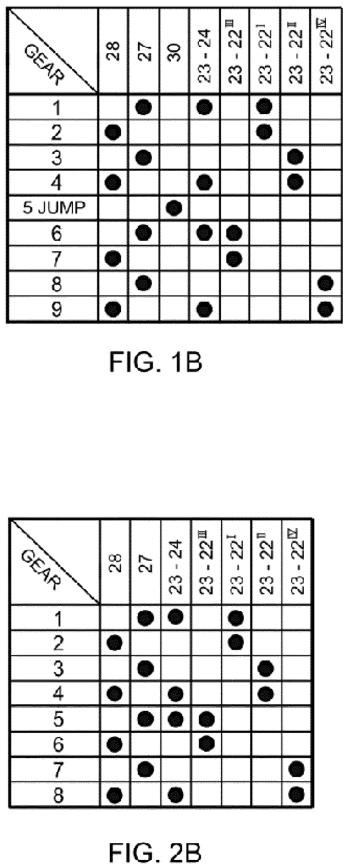

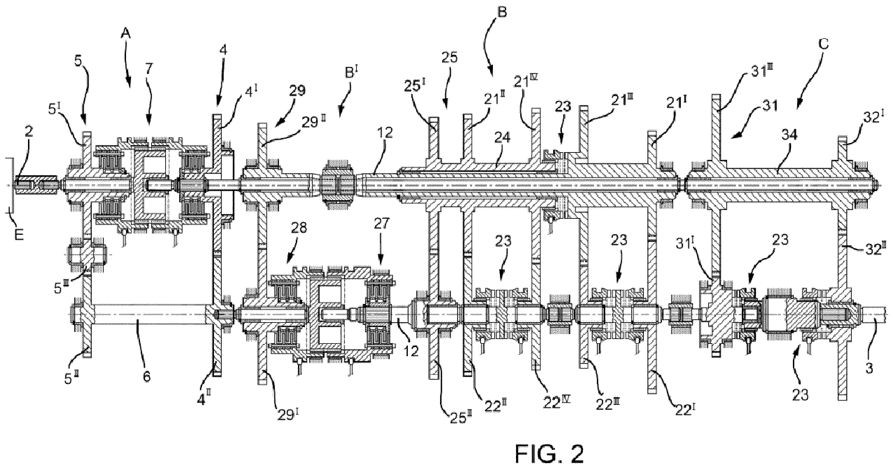

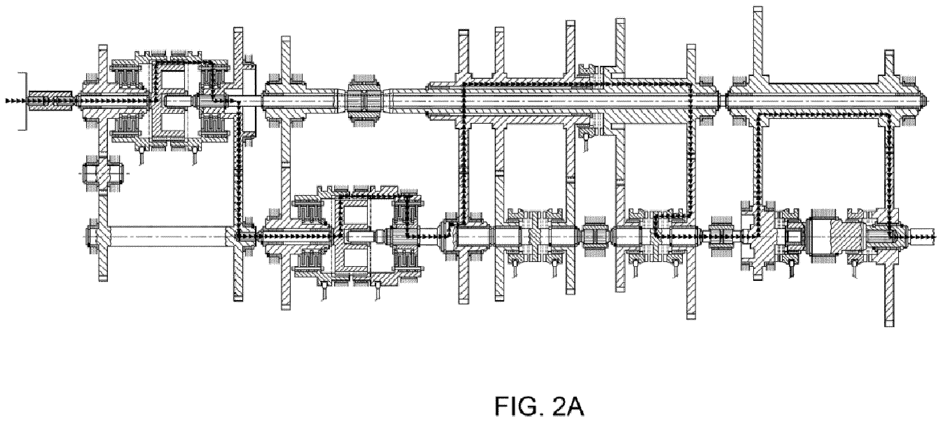

Figures 1 and 2 disclose a transmission 1 for an off-road vehicle, such as an agricultural vehicle, e.g. a tractor (not illustrated), comprising an engine input shaft 2, operatively connected to a torque source E, such as an internal combustion engine of the work vehicle, and an output shaft 3, which can be coupled to a drive axle of the off-road vehicle.

The transmission 1 essentially comprises, operatively connected in series one to the other between input shaft 2 and output shaft 3, an input stage A, a gear ratio stage B, and a range gear ratio stage C.

The input stage A may be realized in different manner in order to vary rotational direction of input shaft 2 towards gear ratio B, i.e. between a forward motion and a rearward motion.

In the exemplarily disclosed embodiment, the input stage A comprises a first and a second gearings 4, 5 selectively connectable to a first support shaft 6. The first gearing 4 comprises a first wheel 4' rotatably carried by input shaft 2 and a second wheel 4" carried in a fixed manner by the first support shaft 6 while the second gearing comprises a first wheel 5' rotatably carried by input shaft 2 and a second wheel 5" carried in a fixed manner by the first support shaft 6 and a third wheel 5‴ operatively interposed between the first and the second wheels 5', 5". The first wheels 4', 5' of gearings 4, 5 are selectively fixed to the input shaft 2 via coupling means 7 such as clutch means or equivalent ones.

The first support shaft 6 provides input torque to the gear ratio stage B. In particular, this latter comprises a coupling stage B' and an even-odd stage B".

In detail, coupling stage B' is configured to allow a jump powershift connection or a semi powershift connection between the fourth and the fifth gear ratio defined in even-odd stages B" as described further below in detail.

In detail, the even-odd stage B" comprises a pair of shafts, namely an odd shaft 11, an even shaft 12 that are coupled via coupling stage B' to the input stage A and a plurality of gears 21, 22 accommodated on respectively even or odd shafts 11, 12 and having a different size one with respect to the other.

Preferably the even shaft 11 may carry four gears 21, namely a first gear 21^{l} having the biggest diameter, a fourth gear 21^{IV} having the smallest diameter and a second and third gears 21^{II}, 21^{III} having respective diameters comprised between the ones of first and the fourth gears 21^{I}, 21^{IV}.

The odd shaft 12 may carry four gears 22, namely a first gear 22^{I} having the biggest diameter, a fourth gear 22^{IV} having the smallest diameter and a second and third gears 22", 22^{III} having respective diameters comprised between the ones of first and the fourth gears 22^{I}, 22^{IV}.

Advantageously, the gears 21 and 22 have the same diameter of the gear 21, 22 with which each meshes.

The gears of gears sets 21, 22, when selected, represent the different speed ratios of the transmission, namely a first, a second, a third, a fourth, a fifth, a sixth and a seventh speed ratio according to the specific selection of one of the aforementioned wheels 21, 22.

In detail, wheels 22 are supported in a rotatable free manner the respective even shaft 12, e.g. by means of bearings, so that they are not forced to rotate to the same speed of the respective even shaft 12. In particular, they are fixedly engaged to the even shaft 12 by coupling means 23 such as dog clutches.

In particular, even shaft 12 may comprise two dog clutches 17 interposed respectively between the gear 15^{I}- 15^{III} and 15^{II}-15^{IV}.

With respect to odd gears, at least one gear 21^{I}, 21^{III} is carried fixedly by odd shaft 11 while the remaining ones 21^{II}, 21^{IV} are carried by an auxiliary shaft 24 that is carried in a rotatably free manner over odd shaft 11.

In detail, the second and fourth wheels 21", 21^{IV} are carried rigidly by the auxiliary shaft 24 while the first and third wheels 21^{I}, 21^{III} are carried rigidly by odd shaft 11.

In detail, the auxiliary shaft 24 is selectively connectable to the odd shaft 11 via coupling means 23 such as the one above described.

Referring to first embodiment of figure 1, the auxiliary shaft 24 is connected to the coupling stage B' that comprises a first gearing 25 comprising a first wheel 25' fixedly carried by auxiliary shaft 24 and a second wheel 25" that is rotatably free carried by even shaft 12. The coupling stage B' further comprises a first clutch means 27 configured to connect together the second wheel 25" to the intermediate shaft 6.

Then, the coupling stage B' comprises a second gearing 29 comprising a first wheel 29' fixedly carried by odd shaft 11 and a second wheel 29" rotatably carried by intermediate shaft 6. The coupling stage B' comprising second clutch means 28 configured to be selectively fix to the second wheel 29" to the intermediate shaft 6.

The first and second clutch means 27, 28 are preferably rotationally engaged together via their respective housings.

The coupling stage B' further comprises third clutch means 40 configured to selectively couple together the intermediate shaft 6 directly to even shaft 12.

Advantageously, the range gear stage C adds a plurality of additional gear ratio that are combined with the gear ratios defined by the gear ratio stage B. In the disclosed embodiment, three range gear ratio are provided.

Advantageously, the range gear ratio stage C then comprises a first, a second and a third range gearings 31, 32, 33 each comprising a first wheel 31', 32', 33' and a second wheel 31", 32", 33". In particular, first gearing is the so-called fast direct range, the second gearing is the so-called medium range and the third gearing is the so-called low range.

The first wheels 32', 33' of the second and third range gearings 32', 33' are rotatably free carried by odd shaft 11, in particular fixed to an auxiliary shaft 34 that is rotatably free carried by odd shaft 11, while second wheels 32", 33" of the second and third range gearing 32, 33 are rotatably free carried by the output shaft 3. Differently, the first wheel 31' of the first range gearing 31 is fixedly carried by the auxiliary shaft 34 while the second wheel 31" is fixedly carried by even shaft 12.

The second wheels 32", 33' of the second and third range gears are selectively connected to output shaft 3 via coupling means 23 of the above described typology, while the second wheel 31" of the first range gear 31 may be directly connected to output shaft 3, i.e. making the output shaft 3 directly connected to even shaft 12.

The above described clutches 7, 27, 28, 30 and coupling means 23 can be selected by respective actuators (not shown) that are controlled by an electronic control unit (not shown). The electronic control unit controls said clutches or said control means by sending control electric signals directed to the respective clutches or coupling means to be controlled.

The electronic control unit can be either the ECU of the vehicle or driveline ECU of the vehicle. The electronic control unit is configured to control the above cited elements of the transmission 1 as per direct input command of the user of the vehicle or in automatic way following the shift control logic deployed into a specific software code, which can be memorized into the electronic unit.

The vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

The operation of the transmission 1 according to above described first embodiment is described in the following making reference to figure 1A and to table of figure 1B.

The vehicle is driving, e.g. forward, in I gear ratio, i.e. in the configuration shown in figure 1A. In such configuration, the torque passes therefore from input module A from input shaft 2 toward first support shaft 6. If reverse motion is needed, input stage A is controlled accordingly.

In figure 1A configuration clutches 28, 30 are disengaged while clutch 27 is engaged and then torque passes via gearing 25 and auxiliary shaft 24 to wheel 22^{I} that is engaged to even shaft 12. With respect to range, the third range gear wheel 33^{I} is selected and torque flows towards output shaft 3.

In order to pass to second gear ratio, it is sufficient to swap clutches 27 and 28 to obtain a different torque ratio. Then to pass to third gear ratio, the related gear can be preselected and clutches 27 and 28 swapped thereby obtaining a powershift shifting.

Similar condition is achieved, as listed in the table, via jump gear ratio corresponding to fifth gear ratio by swapping cutch means 30.

The remaining gear ratios and derivable pre-selection of gears and swap of clutches are disclosed in the summarizing table of figure 1B and are not further reported for sake of brevity.

Due to the proposed nine range gear ratio per three range ratio, the transmission may lead to twenty-seven overall speed ratio.

Figure 2 discloses a second embodiment of transmission 1 that differs from the first embodiment of figure 1 in the coupling stage B' and in the range gear stage C.

In particular, the coupling stage B' does not comprise clutch means 30, therefore there is no possibility of adding a jump ratio by directly connecting the intermediate shaft 6 and the even shaft 12.

Similarly, the range gear stage C does not comprise the medium range wheel thereby defining only two possible range gear ratios.

The operation of the transmission 1 according to the above described second embodiment is described in the following making reference to figure 2A and to table of figure 2B.

The vehicle is driving, e.g. forward, in I gear ratio, i.e. in the configuration shown in figure 2A. In such configuration, the torque passes therefore from input module A from input shaft 2 toward first support shaft 6. If reverse motion is needed, input stage A is controlled accordingly.

In figure 2A configuration clutches 28, 30 are disengaged while clutch 27 is engaged and then torque passes via gearing 25 and auxiliary shaft 24 to wheel 22^{I} that is engaged to even shaft 12. With respect to range, the third range gear wheel 33^{I} is selected and torque flows towards output shaft 3.

In order to pass to second gear ratio, it is sufficient to swap clutches 27 and 28 to obtain a different torque ratio. Then to pass to third gear ratio, the related gear can be preselected and clutches 27 and 28 swapped thereby obtaining a powershift shifting.

The remaining gear ratios and derivable pre-selection of gears and swap of clutches are disclosed in the summarizing table of figure 1B and are not further reported for sake of brevity.

Due to the proposed eight range gear ratio per two range ratio, the transmission may lead to sixteen overall speed ratio.

The invention also comprises a method for operating a transmission 1 as described above for shifting from a gear ratio of the gear ratio stage B to a requested gear ratio of the gear ratio stage B and comprising the following steps:
- i) receiving an input for shifting from a gear ratio of gear ratio stage B to a requested gear ratio of the gear ratio stage B;
- ii) if the requested gear ratio foresees the use of the same initial gear of the gear ratio stage B, then proceed to step v) otherwise proceed with steps iii) and iv);
- iii) engage by coupling means 23 a further gear involved in the requested gear ratio to the second range gear shaft;
- iv) swap clutches 27, 28, 30 involved in the torque transmission to pass from the initial gear to the further gear;
- v) swap clutches 27, 28, 30 involved in the torque transmission to pass to the requested gear ratio.

In view of the foregoing, the advantages of a transmission architecture 1 according to the invention and the related method are apparent.

The proposed arrangement allows to reduce the inertia at gear switching, thereby smoothing the gear switching. Furthermore, reduction of inertia allows to reduce the weight and the cost of manufacturing gears and shafts.

Furthermore, with respect to known arrangements, the proposed transmission uses less clutches thereby reducing their power consumption therefore increasing the efficiency of the transmission architecture.

Moreover, a reduced number countershafts is present, the passive inertia of the transmission are reduces, thereby further increasing the efficiency of this latter.

Furthermore, the number of gears controlled by coupling means is reduced, thereby further reducing weight and costs of manufacturing the transmission.

Finally the large number gear ratios provided leads to a consistent advantages in covering a larger ground speed range with the same transmission architecture.

It is clear that modifications can be applied to the described transmission 1 which do not extend beyond the scope of protection defined by the claims.

For example, the number and typology of gears of gear ratio, range and idler gears may be varied according to vehicle necessity.

Further, the transmission may comprise different elements with respect to the described one, e.g. the number and/or typologies of clutches, gears and dog clutches may be varied. Accordingly, input stage A may be realized in any convenient manner.

Moreover, the control and typology of coupling means 30 may be implemented with any typology of control, e.g. a hydraulic, electric or pneumatic in altemative or in combinations.

## Claims

1. An architecture for a dual clutch transmission (1) for a work vehicle, said architecture comprising:
• an input shaft (2) configured to be coupled to a power source (E) of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3),
wherein said input stage (A) is configured to transmit torque from said input shaft (2) to an intermediate shaft (6),
wherein said gear ratio stage (B) comprises an even-odd stage (B") and coupling stage (B'), even-odd stage (B") and coupling stage (B') both comprising a first and second shafts (11, 12),
the even-odd stage (B") comprising a first and a second plurality of gears (21, 22) respectively carried by said first and second shafts (11, 12), the plurality of gears (22) carried by said second shaft (12) being rotatably free carried by this latter and being selectively engaged at rotation via selection means (23), the plurality of gears (21) carried by said first shaft (11) being in part rotatably free carried by this latter via a first support shaft (24) rotatably carried by said first shaft (11) and being selectively engageable at rotation and in part fixedly carried by this latter,
the coupling stage (B') comprising a first and a second clutch means (28, 27) and a first gearing (29), wherein said first gearing (29) comprises a first gear (29') rotatably carried by said intermediate shaft (6) and selectively engage to this latter by said first clutch means (28) and a second gear (29"), said second clutch means (27) being configured to selectively engage together said intermediate shaft (6) to one between said second shaft (12) or said first support shaft (24),
wherein said second shaft (12) being connected via said range gear stage (C) to said output shaft (3).

2. Architecture according to claim 1, wherein the housings of said first and second clutch means (28, 27) are rotationally engaged together.

3. Architecture according to claim 1 or 2, wherein said second clutch means (27) are configured to selectively engage said first support shaft (24) to said intermediate shaft (6) via a second gearing (25).

4. Architecture according to claim 3, wherein said second gearing (25) comprises a third gear (25') rotatably carried by a second support shaft (26) rotatably carried by said second shaft (12) and selectively engaged by said second clutch means (27) to said intermediate shaft (6) and a fourth gear (25") fixedly carried by said first support shaft (24).

5. Architecture according to claims 2 and 4, wherein further comprising third clutch means (30) configured to connect together said housings of said first and second clutch means (28, 27) to said second intermediate shaft (26).

6. Architecture according to claim 1 or 2, wherein said second clutch means (27) are configured to selectively engage said second shaft (12) to said intermediate shaft (6).

7. Architecture according to claim 6, wherein said second shaft (12) is connected to said first support shaft (24) via a second gearing (25) comprises a third gear (25') fixedly carried by said second shaft (12) and a fourth gear (25") fixedly carried by said first support shaft (24).

8. Architecture according to any of the preceding claims, wherein said range gear stage (C) comprises a third and a fourth gearings (31, 32) each provided by a fifth and sixth gears (31', 32'; 31", 32"), said fifth gears (31', 32') being rotatably free carried by said second shaft (12) and selectively engaged to this latter via selection means (23), said sixth gears (31", 32") being carried fixedly by a common shaft (34) rotatably free carried by said first shaft (11).

9. Architecture according to claim 6, wherein said range gear stage (C) further comprises a fifth gearing (33) provided with a seventh and eighth gears (33', 33"), said seventh gears (33') being rotatably free carried by said second shaft (12) and selectively engaged to this latter via selection means (23), said eighth gears (33") being carried fixedly by said common shaft (34).

10. Architecture according to any of the preceding claims, wherein said first support shaft (24) is selectively connectable to said first shaft (11) via selection means (23).

11. Architecture according to any of the preceding claims, wherein said selection means (23) comprises a synchronizer or a dog clutch.

12. Architecture according to any of the preceding claims further comprising a control unit configured to control actuators configured to regulate the operation of said clutch means and said selection means (23).

13. Method for operating a transmission architecture (1) as claimed in claim 12 for shifting from a gear ratio of the gear ratio stage (B) to a requested gear ratio of the gear ratio stage (B) and comprising the following steps:
• i) receiving an input for shifting from a gear ratio of gear ratio stage (B) to a requested gear ratio of the gear ratio stage (B);
• ii) if the requested gear ratio foresees the use of the same initial gear of the gear ratio stage (B), then proceed to step v) otherwise proceed with steps iii) and iv);
• iii) engage by coupling means (23) a further gear involved in the requested gear ratio to the second range gear shaft;
• iv) swap clutches (27, 28; 30) involved in the torque transmission to pass from the initial gear to the further gear;
• v) swap clutches (27, 28; 30) involved in the torque transmission to pass to the requested gear ratio.

## Patentansprüche

1. Architektur für ein Doppelkupplungsgetriebe (1) für ein Arbeitsfahrzeug, wobei die Architektur umfasst:
• eine Antriebswelle (2), die konfiguriert ist, um an eine Energiequelle (E) des Arbeitsfahrzeugs gekoppelt zu werden,
• eine Abtriebswelle (3), die konfiguriert ist, um mit einer Antriebsachse des Arbeitsfahrzeugs verbunden zu werden,
• eine Eingangsstufe (A), eine Übersetzungsstufe (B) und eine Bereichsübersetzungsstufe (C), die bezüglich der Antriebswelle (2) und der Abtriebswelle (3) funktionell miteinander verbunden sind,
wobei die Eingangsstufe (A) konfiguriert ist, um Drehmoment von der Antriebswelle (2) auf eine Zwischenwelle (6) zu übertragen,
wobei die Übersetzungsstufe (B) eine Gerade-Ungerade-Stufe (B") und eine Kupplungsstufe (B') umfasst, wobei die Gerade-Ungerade-Stufe (B") und die Kupplungsstufe (B') beide eine erste und eine zweite Welle (11, 12) umfassen,
wobei die Gerade-Ungerade-Stufe (B") eine erste und eine zweite Vielzahl von Zahnrädern (21, 22) umfasst, die jeweils von der ersten und der zweiten Welle (11, 12) getragen werden, wobei die von der zweiten Welle (12) getragene Vielzahl von Zahnrädern (22) von letzterer frei drehbar getragen wird und über Auswahlmittel (23) selektiv in Drehung in Eingriff gebracht wird, wobei die von der ersten Welle (11) getragene Vielzahl von Zahnrädern (21) teilweise von letzterer über eine erste Stützwelle (24), die drehbar von der ersten Welle (11) getragen wird, frei drehbar getragen wird und selektiv in Drehung in Eingriff bringbar ist und teilweise fest von letzterer getragen wird,
wobei die Kupplungsstufe (B') ein erstes und ein zweites Kupplungsmittel (28, 27) und eine erste Verzahnung (29) umfasst, wobei die erste Verzahnung (29) ein erstes Zahnrad (29'), das drehbar von der Zwischenwelle (6) getragen wird und durch das erste Kupplungsmittel (28) selektiv mit letzterer in Eingriff bringbar ist, und ein zweites Zahnrad (29'') umfasst, wobei das zweite Kupplungsmittel (27) konfiguriert ist, um die Zwischenwelle (6) selektiv zusammen mit einer von der zweiten Welle (12) oder der ersten Stützwelle (24) in Eingriff zu bringen,
wobei die zweite Welle (12) über die Bereichsgetriebestufe (C) mit der Abtriebswelle (3) verbunden ist.

2. Architektur nach Anspruch 1, wobei die Gehäuse des ersten und zweiten Kupplungsmittels (28, 27) drehend miteinander in Eingriff stehen.

3. Architektur nach Anspruch 1 oder 2, wobei das zweite Kupplungsmittel (27) konfiguriert ist, die erste Stützwelle (24) über eine zweite Verzahnung (25) selektiv mit der Zwischenwelle (6) in Eingriff zu bringen.

4. Architektur nach Anspruch 3, wobei die zweite Verzahnung (25) ein drittes Zahnrad (25'), das drehbar von einer zweiten Stützwelle (26) getragen wird, die drehbar von der zweiten Welle (12) getragen wird, und durch die zweite Kupplungseinrichtung (27) selektiv mit der Zwischenwelle (6) in Eingriff gebracht wird, und ein viertes Zahnrad (25''), das fest von der ersten Stützwelle (24) getragen wird, umfasst.

5. Architektur nach den Ansprüchen 2 und 4, wobei sie ferner dritte Kupplungsmittel (30) umfasst, die konfiguriert sind, um die Gehäuse des ersten und zweiten Kupplungsmittels (28, 27) zusammen mit der zweiten Zwischenwelle (26) zu verbinden.

6. Architektur nach Anspruch 1 oder 2, wobei das zweiten Kupplungsmittel (27) konfiguriert ist, um die zweite Welle (12) selektiv mit der Zwischenwelle (6) in Eingriff zu bringen.

7. Architektur nach Anspruch 6, wobei die zweite Welle (12) mit der ersten Stützwelle (24) über eine zweite Verzahnung (25) verbunden ist, ein drittes Zahnrad (25'), das fest von der zweiten Welle (12) getragen wird, und ein viertes Zahnrad (25''), das fest von der ersten Stützwelle (24) getragen wird, umfasst.

8. Architektur nach einem der vorstehenden Ansprüche, wobei die Bereichsgetriebestufe (C) eine dritte und eine vierte Verzahnung (31, 32) umfasst, jeweils bereitgestellt durch ein fünftes und sechstes Zahnrad (31', 32'; 31", 32"), wobei die fünften Zahnräder (31', 32') frei drehbar auf der zweiten Welle (12) gelagert sind und über Auswahlmittel (23) wahlweise mit letzterer in Eingriff gebracht sind, wobei die sechsten Zahnräder (31", 32") fest von einer gemeinsamen Welle (34) getragen werden, die frei drehbar auf der ersten Welle (11) gelagert ist.

9. Architektur nach Anspruch 6, wobei die Bereichsgetriebestufe (C) ferner eine fünfte Verzahnung (33) umfasst, die mit einem siebten und achten Zahnrad (33', 33") bereitgestellt ist, wobei die siebten Zahnräder (33') frei drehbar von der zweiten Welle (12) getragen werden und selektiv mit letzterer über Auswahlmittel (23) in Eingriff gebracht werden, wobei die achten Zahnräder (33") fest von der gemeinsamen Welle (34) getragen werden.

10. Architektur nach einem der vorstehenden Ansprüche, wobei die erste Stützwelle (24) über Auswahlmittel (23) selektiv mit der ersten Welle (11) verbindbar ist.

11. Architektur nach einem der vorstehenden Ansprüche, wobei das Auswahlmittel (23) eine Synchronisiereinrichtung oder eine Klauenkupplung umfasst.

12. Architektur nach einem der vorstehenden Ansprüche, ferner umfassend eine Steuereinheit, die konfiguriert ist, um Aktuatoren zu steuern, die konfiguriert sind, um den Betrieb der Kupplungsmittel und der Auswahlmittel (23) zu regeln.

13. Verfahren zum Betreiben einer Getriebearchitektur (1) nach Anspruch 12 zum Schalten von einem Übersetzungsverhältnis der Übersetzungsstufe (B) auf ein angefordertes Übersetzungsverhältnis der Übersetzungsstufe (B) und umfassend die folgenden Schritte:
• i) Empfangen einer Eingabe zum Schalten von einem Übersetzungsverhältnis der Übersetzungsstufe (B) auf ein angefordertes Übersetzungsverhältnis der Übersetzungsstufe (B);
• ii) wenn das angeforderte Übersetzungsverhältnis die Verwendung desselben ersten Zahnrads der Übersetzungsstufe (B) vorsieht, dann Fortfahren mit Schritt v), andernfalls Fortfahren mit den Schritten iii) und iv);
• iii) In-Eingriff-Bringen mittels Kupplungsmittel (23) eines weiteren Zahnrads, das an dem angeforderten Übersetzungsverhältnis beteiligt ist, mit der zweiten Bereichsgetriebewelle;
• iv) Wechseln der an der Drehmomentübertragung beteiligten Kupplungen (27, 28; 30), um von dem Ausgangsgang in den weiteren Gang zu schalten;
• v) Wechseln der an der Drehmomentübertragung beteiligten Kupplungen (27, 28; 30), um in das angeforderte Übersetzungsverhältnis zu schalten.

## Revendications

1. Architecture pour une transmission à double embrayage (1) pour un véhicule de travail, ladite architecture comprenant :
• un arbre d'entrée (2) conçu pour être accouplé à une source d'alimentation (E) dudit véhicule de travail,
• un arbre de sortie (3) conçu pour être relié à un essieu moteur dudit véhicule de travail,
• un étage d'entrée (A), un étage de rapport de vitesse (B) et un étage de rapport de vitesse de plage (C) reliés de manière fonctionnelle l'un à l'autre par rapport audit arbre d'entrée (2) et audit arbre de sortie (3),
dans laquelle ledit étage d'entrée (A) est conçu pour transmettre un couple dudit arbre d'entrée (2) à un arbre intermédiaire (6),
dans laquelle ledit étage de rapport de vitesse (B) comprend un étage pair-impair (B") et un étage d'accouplement (B'), l'étage pair-impair (B") et l'étage d'accouplement (B') comprenant tous deux des premier et second arbres (11, 12),
l'étage pair-impair (B") comprenant une première et une seconde pluralité de pignons (21, 22) respectivement portés par lesdits premier et second arbres (11, 12), la pluralité de pignons (22) portés par ledit second arbre (12) étant portés de manière libre en rotation par ce dernier et étant sélectivement mis en prise en rotation par l'intermédiaire d'un moyen de sélection (23), la pluralité de pignons (21) portés par ledit premier arbre (11) étant en partie portés de manière libre en rotation par ce dernier par l'intermédiaire d'un premier arbre de support (24) porté de manière rotative par ledit premier arbre (11) et pouvant sélectivement venir en prise en rotation et étant en partie porté de manière fixe par ce dernier,
l'étage d'accouplement (B') comprenant un premier et un second moyen d'embrayage (28, 27) et un premier engrenage (29), dans laquelle ledit premier engrenage (29) comprend un premier pignon (29') porté de manière rotative par ledit arbre intermédiaire (6) et mis en prise sélectivement avec ce dernier par ledit premier moyen d'embrayage (28) et un deuxième pignon (29"), ledit second moyen d'embrayage (27) étant conçu pour mettre sélectivement en prise ledit arbre intermédiaire (6) à l'un parmi ledit second arbre (12) ou ledit premier arbre de support (24),
dans laquelle ledit second arbre (12) est relié par l'intermédiaire dudit étage d'engrenage de plage (C) audit arbre de sortie (3).

2. Architecture selon la revendication 1, dans laquelle les boîtiers desdits premier et second moyens d'embrayage (28, 27) sont en prise en rotation ensemble.

3. Architecture selon la revendication 1 ou 2, dans laquelle ledit second moyen d'embrayage (27) est conçu pour mettre en prise sélectivement ledit premier arbre de support (24) avec ledit arbre intermédiaire (6) par l'intermédiaire d'un second engrenage (25).

4. Architecture selon la revendication 3, dans laquelle ledit second engrenage (25) comprend un troisième pignon (25') porté de manière rotative par un second arbre de support (26) porté de manière rotative par ledit second arbre (12) et mis en prise sélectivement par ledit second moyen d'embrayage (27) audit arbre intermédiaire (6) et un quatrième pignon (25") porté de manière fixe par ledit premier arbre de support (24).

5. Architecture selon les revendications 2 et 4, comprenant en outre un troisième moyen d'embrayage (30) conçu pour relier ensemble lesdits boîtiers desdits premier et second moyens d'embrayage (28, 27) audit second arbre intermédiaire (26).

6. Architecture selon la revendication 1 ou 2, dans laquelle ledit second moyen d'embrayage (27) est conçu pour mettre en prise sélectivement ledit second arbre (12) avec ledit arbre intermédiaire (6).

7. Architecture selon la revendication 6, dans laquelle ledit second arbre (12) est relié audit premier arbre de support (24) par l'intermédiaire d'un second engrenage (25) comprenant un troisième pignon (25') porté de manière fixe par ledit second arbre (12) et un quatrième pignon (25") porté de manière fixe par ledit premier arbre de support (24).

8. Architecture selon l'une quelconque des revendications précédentes, dans laquelle ledit étage d'engrenage de plage (C) comprend des troisième et quatrième engrenages (31, 32) fournis chacun par de cinquièmes et sixièmes pignons (31', 32' ; 31", 32"), lesdits cinquièmes pignons (31', 32') étant portés de manière libre en rotation par ledit second arbre (12) et sélectivement en prise avec ce dernier par l'intermédiaire d'un moyen de sélection (23), lesdits sixièmes pignons (31", 32") étant portés de manière fixe par un arbre commun (34) porté de manière libre en rotation par ledit premier arbre (11).

9. Architecture selon la revendication 6, dans laquelle ledit étage d'engrenage de plage (C) comprend en outre un cinquième engrenage (33) pourvu d'un septième et d'un huitième pignon (33', 33"), lesdits septièmes pignons (33') étant portés de manière libre en rotation par ledit second arbre (12) et sélectivement mis en prise avec ce dernier par l'intermédiaire d'un moyen de sélection (23), lesdits huitièmes pignons (33") étant portés de manière fixe par ledit arbre commun (34).

10. Architecture selon l'une quelconque des revendications précédentes, dans laquelle ledit premier arbre de support (24) peut être sélectivement relié audit premier arbre (11) par l'intermédiaire d'un moyen de sélection (23).

11. Architecture selon l'une quelconque des revendications précédentes, dans laquelle ledit moyen de sélection (23) comprend un synchroniseur ou un embrayage à griffes.

12. Architecture selon l'une quelconque des revendications précédentes, comprenant en outre une unité de commande configurée pour commander des actionneurs configurés pour réguler le fonctionnement dudit moyen d'embrayage et dudit moyen de sélection (23).

13. Procédé permettant le fonctionnement d'une architecture de transmission (1) selon la revendication 12 pour passer d'un rapport de vitesse de l'étage de rapport de vitesse (B) à un rapport de vitesse demandé de l'étage de rapport de vitesse (B) et comprenant les étapes suivantes :
• i) la réception d'une entrée pour passer d'un rapport de vitesse de l'étage de rapport de vitesse (B) à un rapport de vitesse demandé de l'étage de rapport de vitesse (B) ;
• ii) si le rapport de vitesse demandé prévoit l'utilisation du même rapport initial de l'étage de rapport de vitesse (B), passer à l'étape v) sinon, passer aux étapes iii) et iv) ;
• iii) mettre en contact, par un moyen d'accouplement (23), un autre pignon impliqué dans le rapport de vitesse demandé avec le second arbre de vitesse de plage ;
• iv) intervertir les embrayages (27, 28 ; 30) impliqués dans la transmission de couple pour passer du rapport initial au rapport suivant ;
• v) intervertir les embrayages (27, 28 ; 30) impliqués dans la transmission de couple pour passer au rapport de vitesse demandé.
